# EUROPÄISCHE PATENTSCHRIFT

(11) **EP 3 560 798 B1**
(45) Veröffentlichungstag und Bekanntmachung des Hinweises auf die Patenterteilung: **16.06.2021**
(21) Anmeldenummer: 18169312.8
(22) Anmeldetag: 25.04.2018
(51) Int. Cl.: B62D 25/00, B62D 29/00

(54) **DÄMMELEMENT**
INSULATION ELEMENT
ÉLÉMENT D'ISOLATION

(43) Veröffentlichungstag der Anmeldung: 30.10.2019
(73) Patentinhaber: SIKA TECHNOLOGY AG, 6340 Baar (CH)
(72) Erfinder: Michalak, Piotr, 8953 Dietikon (CH); Schneider, Bruno, 5525 Fischbach-Göslikon (CH); Meister, Marcel, 8182 Hochfelden (CH)
(74) Vertreter: Sika Patent Attorneys

(56) Entgegenhaltungen:
- WO-A1-97/49598
- WO-A1-03/020574
- WO-A2-02/062648

## Beschreibung

Die Erfindung betrifft ein System in einem Kraftfahrzeug, umfassend ein Strukturelement und ein im Strukturelement angeordnetes Dämmelement. Sie betrifft des Weiteren ein Verfahren zur Dämmung eines Strukturelementes in einem Kraftfahrzeug.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

In der WO 03/020574 A1 ist beispielsweise ein solcher Reinforcer gezeigt. In diesem Fall umfasst der Reinforcer zwei Teile, welche derart ineinandergreifen, dass der Reinforcer durch schmale Öffnungen hindurchgeführt werden kann. Durch eine Verschiebung der beiden Teile relativ zueinander wird der Reinforcer verbreitert, sodass eine Hohlraum Struktur trotz schmaler Öffnung effizient verstärkt werden kann.

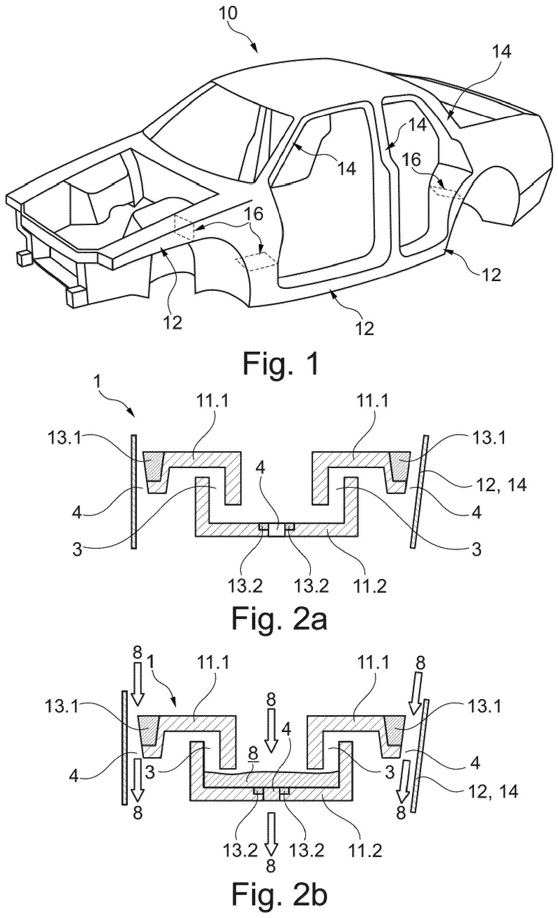

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Abdichtungs- und/oder Verstärkungselementen 16 abgedichtet bzw. verstärkt.

Insbesondere in Radkästen bestehen besondere Anforderungen an Abdichtungs- und/oder Verstärkungselemente 16. Zum einen sollen solche Elemente das Strukturelement zuverlässig abdichten, beispielsweise gegen Schmutz oder auch gegen Wasser, und zum anderen gibt es Fälle, in welchen solche Abdichtungs- und/oder Verstärkungselemente durchlässig sein sollen für Materialien wie beispielsweise Wachse. Bei der Verwendung von Wachsen stellt sich nämlich das Problem, dass diese Wachse nach einer Erstanwendung sich unter Umständen wieder verflüssigen können, beispielsweise wenn das Kraftfahrzeug an der Sonne steht.

Wenn diese verflüssigten Wachse nun vom Abdichtungs- und/oder Verstärkungselement 16 vollständig zurückgehalten werden, dann gibt es oberhalb dieses Abdichtungs- und/oder Verstärkungselementes 16 eine unerwünschte Ansammlung des Wachses.

In der WO 02/062648 A2 wird vorgeschlagen, ein Verschlusselement im Strukturelement vorzusehen, welches einen Durchlass in der Form eines Siphons hat. Dieser Siphon erlaubt es, dass das flüssige Wachs durch das Verschlusselement hindurchfliessen kann, wobei das verfestigte Wachs (wenn die Temperatur unter dem Schmelzpunkt des Wachses sinkt) den Siphon verschliesst. Nachteilig an dieser Lösung ist es jedoch, dass dieses Verschlusselement erst dann in die Karosserie eingebaut werden kann, wenn die Karosserie fertig tauchlackiert und der Lack eingebrannt ist.

Es ist somit eine Aufgabe der vorliegenden Erfindung, ein verbessertes System zur Dämmung von Strukturelementen in einem Kraftfahrzeug zu schaffen, welches die Nachteile der bekannten Systeme vermeidet. Zudem soll das verbesserte System effizient und kostengünstig in der Anwendung sein.

Diese Aufgabe wird gelöst durch ein Verfahren zur Dämmung eines Strukturelementes in einem Kraftfahrzeug, das Verfahren umfassend die Schritte: Bereitstellen eines Strukturelementes mit einem Hohlraum; Anordnen eines Dämmelementes im Hohlraum des Strukturelementes, wobei auf dem Dämmelement expandierbares Material angeordnet ist, wobei das Dämmelement zumindest einen Siphon hat, und wobei das Dämmelement derart ausgebildet und/oder im Strukturelement angeordnet ist, dass zusätzlich zum Siphon zumindest ein Abfluss besteht; Beschichten der Innenwände des Strukturelementes mit einem Lack, wobei der Lack durch den zumindest einen Abfluss abfliessen kann; Erwärmen, wobei das expandierbare Material expandiert und dabei den zumindest einen Abfluss verschliesst;und Einbringen von Wachs in das Strukturelement, wobei das Wachs durch den Siphon des Dämmelementes abfliessen kann, und wobei eine im Siphon verbleibende Restmenge des Wachses den Siphon verschliesst.
Das Dämmelement hat einen Träger mit darauf angeordnetem expandierbarem Material, wobei das expandierbare Material derart auf dem Träger angeordnet ist, zumindest eine Abfluss verschlossen ist, wenn das expandierbare Material in einem expandierten Zustand ist.

Diese Lösung hat den Vorteil, dass durch das Vorsehen von einem zusätzlichen Abfluss bzw. von mehreren zusätzlichen Abflüssen das Dämmelement bereits im Strukturelement angeordnet werden kann, bevor das Strukturelement tauchlackiert wird. Der zumindest eine Abfluss stellt dabei sicher, dass die überschüssige Tauchlackierungsflüssigkeit vollständig aus dem Strukturelement abfliessen kann. Zudem verbessern solche Abflüsse den Durchfluss der Tauchlackierflüssigkeit durch das Strukturelement.

Die Verwendung von expandierbarem Material auf dem Träger des Dämmelementes bietet den Vorteil, dass dadurch der Ofen zur Einbrennung der Tauchlackierungsflüssigkeit benutzt werden kann, um die Abflüsse zuverlässig zu verschliessen, indem das expandierbare Material in diesen Bereichen expandiert. Dadurch wird das Strukturelement zuverlässig gedämmt. Nach dieser Expansion des expandierbaren Materials verbleibt als Durchgang lediglich der zumindest eine Siphon. Somit ist auch gewährleistet, dass flüssiges Wachs, welcher nach dem Lackierofen eingesetzt wird, durch das Dämmelement hindurchfliessen kann. Sobald sich nun das Wachs verfestigt (durch Abkühlung), verschliesst eine Restmenge von Wachs im Siphon das Dämmelement vollständig. Dadurch wird eine zuverlässige Abdichtung gegen Flüssigkeiten, Partikel und/oder Schallwellen erreicht. Sollte sich nun das Wachs im Strukturelement verflüssigen, weil beispielsweise das Kraftfahrzeug an der Sonne steht, kann das erneut verflüssigte Wachs durch den Siphon im Dämmelement durchfliessen. Sobald die Temperatur wieder sinkt und das Wachs erstarrt, verschliesst erneut eine Restmenge an Wachs im Siphon das Dämmelement vollständig.

Ein Kerngedanke der vorliegenden Erfindung besteht darin, dass neben dem zumindest einen Siphon zusätzlich zumindest ein Abfluss vorgesehen wird. Dies erlaubt es, das Dämmelement bereits vor der Tauchlackierung des Strukturelementes im Strukturelement anzubringen. Dadurch wird eine Handhabung des gesamten Systems zum einen vereinfacht und zum anderen kostengünstiger.

Die Bezeichnung "Dämmelement" bzw. "Dämmung" bzw. "gedämmt" umfasst im Zusammenhang mit dieser Erfindung Elemente bzw. Strukturen bzw. Verfahrensschritte zur Abschottung und/oder Verschliessung und/oder Verstärkung und/oder Dämmung eines Strukturelementes. Diese verschiedenen Eigenschaften eines solchen Dämmelementes können dabei einzeln oder aber in Kombination miteinander auftreten.

In einer beispielhaften Ausführungsform ist das Dämmelement derart im Strukturelement angeordnet, dass zwischen dem Dämmelement und dem Strukturelement zumindest ein Abfluss besteht, wenn das expandierbare Material in einem nicht expandierten Zustand ist.

Dies hat den Vorteil, dass durch solche Abflüsse zwischen Dämmelement und Strukturelement die Tauchlackierungsflüssigkeit besonders effizient hindurchfliessen bzw. abfliessen kann. Zudem wird dadurch ermöglicht, dass eine Innenwand des Strukturelementes möglichst vollständig mit Tauchlackierungsflüssigkeit beschichtet werden kann.

In einer beispielhaften Weiterbildung ist dabei der Träger des Dämmelementes mit zumindest einem Clip im Strukturelement einrastbar.

In einer beispielhaften Ausführungsform ist das Dämmelement derart ausgebildet, dass eine Öffnung im Träger oder eine Öffnung zwischen zwei Teilträgern den zumindest einen Abfluss bildet, wenn das expandierbare Material in einem nicht expandierten Zustand ist.

Dies hat den Vorteil, dass dadurch ein Abfluss zur Verfügung gestellt wird, welcher beispielsweise das Abfliessen der Tauchlackierungsflüssigkeit in einem Bereich des Siphons des Dämmelementes erlaubt. Somit kann gewährleistet werden, dass die Tauchlackierungsflüssigkeit vollständig aus dem Dämmelement abfliessen kann.

In einer beispielhaften Ausführungsform ist der Träger zweiteilig oder mehrteilig ausgebildet, so dass der Träger zumindest einen ersten Teilträger und einen zweiten Teilträger umfasst.

Eine solche Ausgestaltung des Trägers in Teilträgern bietet den Vorteil, dass dadurch eine Produktion des Dämmelementes vereinfacht wird. Dies ist insbesondere dann wichtig, wenn der Träger im Spritzgussverfahren hergestellt wird. Durch das Vorsehen von Teilträgern können somit kompliziertere Querschnitte des Trägers ausgebildet werden, als dies bei einem einstückigen Träger der Fall wäre.

In einer alternativen Ausführungsform ist der Träger einstückig ausgebildet.

In einer beispielhaften Ausführungsform umfassen die Teilträger jeweils ein Kopplungselement zur Verbindung der Teilträger zum Träger.

In einer beispielhaften Weiterbildung ist ein erstes Kopplungselement als Öffnung ausgebildet, und ein zweites Kopplungselement ist als Clip ausgebildet, wobei der Clip in der Öffnung einrastbar ist.

Dies bietet den Vorteil, dass dadurch die Teilträger auf einfache Art und Weise miteinander verbindbar sind.

In einer beispielhaften Ausführungsform weist der erste Teilträger im Wesentlichen eine Form eines Querschnittes des Strukturelementes auf, und der zweite Teilträger ist wannenartig ausgebildet.

In einer beispielhaften Weiterbildung bildet ein Wannenrand des zweiten Teilträgers zusammen mit zumindest einem bogenförmigen Element des ersten Teilträgers den zumindest einen Siphon.

In einer beispielhaften Ausführungsform ist in einem Boden des wannenförmigen zweiten Teilträgers eine Öffnung ausgebildet, welche den zumindest einen Abfluss bildet.

Das Vorsehen eines solchen wannenartigen Elementes, insbesondere eines wannenartigen Elementes mit einem in einem Boden angeordneten Abfluss bietet den Vorteil, dass dadurch ein Siphon und ein Abfluss gebildet werden können, welche die oben beschriebenen Vorteile mit sich bringen.

**In** einer beispielhaften Ausführungsform ist das expandierbare Material auf einem Randbereich des Trägers, welcher an den zumindest einen Abfluss angrenzt, angeordnet.

Eine solche Anordnung des expandierbaren Materials bietet den Vorteil, dass dadurch der zumindest eine Abfluss zuverlässig verschlossen werden kann durch eine Expansion des expandierbaren Materials.

Als expandierbares Material kann grundsätzlich jedes beliebige Material eingesetzt werden, das kontrolliert zur Schäumung gebracht werden kann. Dieses Material kann dabei Verstärkungseigenschaften aufweisen oder auch nicht. Typischerweise wird das schäumbare Material thermisch, durch Feuchtigkeit oder durch elektromagnetische Strahlung geschäumt.

Ein solches expandierbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage, Schaumstrukturen in Polymeren zu erzeugen.

Bevorzugt wird das expandierbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate. Geeignete Treibmittel sind beispielsweise auch kommerziell erhältlich unter dem Handelsnamen Expancel® von der Firma Akzo Nobel, Niederlande, oder unter dem Handelsnamen Celogen® von der Firma Chemtura Corp., USA.
Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 160°C, insbesondere von 80°C bis 150°C, bevorzugt von 90°C bis 140°C, schäumbar.

Als expandierbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete expandierbare Materialien sind Treibmittel enthaltende einkomponentige Polyurethanzusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50°C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon® BF 1350 und Vestagon® BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschreiben sind in EP 0 204 970.

Weiterhin eignen sich als expandierbare Materialien Treibmittel enthaltende zweikomponentige Epoxid/Polyurethan-Zusammensetzungen, wie sie beispielsweise beschrieben sind in WO 2005/080524 A1.

Weiterhin eignen sich als expandierbare Materialien Treibmittel enthaltende Ethylen-Vinyl-Acetat-Zusammensetzungen.

Ebenfalls geeignete expandierbare Materialien werden beispielsweise unter dem Handelsnamen SikaBaffle® 240, SikaBaffle® 250 oder SikaBaffle® 255 von der Sika Corp., USA, vertrieben und sind in den Patenten US 5,266,133 und US 5,373,027 beschrieben. Solche expandierbaren Materialien sind für die vorliegende Erfindung besonders bevorzugt.
Als expandierbare Materialien mit Verstärkungseigenschaften sind beispiels-weise diejenigen bevorzugt, welche unter dem Handelsnamen SikaReinforcer® 941 von der Sika Corp., USA, vertrieben werden. Diese sind beschrieben in US 6,387,470.

In einer beispielhaften Ausführungsform hat das expandierbare Material eine Expansionsrate von 800% bis 4000%, bevorzugt von 1000% bis 3000%, besonders bevorzugt von 1500% bis 3000%.

Expandierbare Materialien mit solchen Expansionsraten bieten den Vorteil, dass dadurch einerseits der zumindest eine Abfluss zuverlässig verschlossen werden kann, und andererseits eine zuverlässige Abdichtung bzw. Dämmung des Strukturelementes gegen Flüssigkeiten und Schall erreicht werden kann.

In einer beispielhaften Ausführungsform ist das expandierbare Material als temperaturinduziertes Material ausgebildet.

Dies hat den Vorteil, dass dadurch der Ofen zur Einbrennung der Tauchlackierungsflüssigkeit benutzt werden kann, um das expandierbare Material zu expandieren und um dadurch die Abflüsse zu verschliessen. Somit ist kein zusätzlicher Arbeitsschritt notwendig.

Der Träger kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder gewachsene organische Materialien, insbesondere Holz- oder andere (gepresste) Faserwerkstoffe oder glasartige oder keramische Materialien; speziell auch geschäumte Materialien dieser Art; oder beliebige Kombinationen dieser Materialien.

Besonders bevorzugt wird Polyamid, insbesondere Polyamid 6, Polyamid 6,6, Polyamid 11, Polyamid 12 oder ein Gemisch davon verwendet.

Weiterhin kann der Träger einen beliebigen Aufbau und eine beliebige Struktur aufweisen. Es kann beispielsweise massiv, hohl, oder geschäumt sein oder eine gitterartige Struktur aufweisen. Die Oberfläche des Trägers kann typischerweise glatt, rau oder strukturiert sein.

Bei erfindungsgemässen Abdichtungs- und Verstärkungselementen, bei welchen sich das expandierbare Material auf einem Träger befindet, unterscheidet sich das Herstellungsverfahren dementsprechend, ob der Träger aus einem durch Spritzguss verarbeitbaren Material besteht oder nicht. Ist dies der Fall, wird üblicherweise ein Zweikomponenten-Spritzgussverfahren eingesetzt. Dabei wird zuerst eine erste Komponente, in diesem Fall der Träger, gespritzt. Nach Erstarren dieser ersten Komponente wird die Kavität im Werkzeug vergrössert, bzw. angepasst, oder der hergestellte Spritzling wird in ein neues Werkzeug gelegt, und eine zweite Komponente, in diesem Fall das expandierbare Material, wird mit einem zweiten Spritzaggregat an die erste Komponente angespritzt.

Besteht der Träger aus einem Material, welches sich nicht durch das Spritzgussverfahren herstellen lässt, also beispielsweise aus einem Metall, wird der Träger in ein entsprechendes Werkzeug gelegt und das expandierbare Material wird an den Träger angespritzt. Selbstverständlich besteht auch die Möglichkeit das expandierbare Material durch spezielle Befestigungsmittel oder -verfahren an dem Träger zu befestigen.

In einer beispielhaften Ausführungsform wird beim Erwärmen der Lack auf dem Strukturelement eingebrannt.

In einer beispielhaften Ausführungsform wird als Wachs ein Korrosionsschutzwachs verwendet.

In einer beispielhaften Ausführungsform wird das Verfahren mit einem oben beschriebenen System durchgeführt.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie gemäss Stand der Technik;
- Fig. 2a bis 2e: schematische Darstellung eines Systems in einem Kraftfahrzeug mit einem Strukturelement und einem im Strukturelement angeordneten Dämmelement; und
- Fig. 3a bis 3c: schematische Darstellung eines beispielhaften Dämmelementes.

In den Fig. 2a bis 2e ist beispielhaft ein System 1 mit einem Strukturelement 12, 14 und einem darin angeordneten Dämmelement gezeigt.

In Fig. 2a ist das Dämmelement zunächst im Hohlraum des Strukturelementes 12, 14 angeordnet. Das Dämmelement umfasst dabei einen Träger 11 und auf dem Träger 11 angeordnetes expandierbares Material 13. In diesem Ausführungsbeispiel umfasst der Träger 11 einen ersten Teilträger 11.1 und einen zweiten Teilträger 11.2. Das expandierbare Material 13 ist ebenfalls in ein erstes expandierbares Material 13.1 und in ein zweites expandierbares Material 13.2 gegliedert. Das Dämmelement umfasst einen Siphon 3 und hat zusätzliche Abflüsse 4. Die Abflüsse 4 sind in diesem Ausführungsbeispiel einerseits zwischen dem Dämmelement und dem Strukturelement 12, 14 vorgesehen, und andererseits ist ein Abfluss als Öffnung im Träger 11 ausgebildet. Das expandierbare Material 13 ist jeweils in den Bereichen der Abflüsse 4 auf dem Träger 11 angeordnet.

In Fig. 2a ist eine beispielhafte Situation vor einer Tauchlakierung des Strukturelementes 12, 14 dargestellt. Eine solche Situation besteht beispielsweise direkt nach einer Anordnung des Dämmelementes im Strukturlement 12, 14.

In Fig. 2b ist eine beispielhafte Situation während einer Tauchlackierung des Strukturelementes 12, 14 dargestellt. Dabei kann der Lack 8 durch die Abflüsse 4 hindurchfliessen bzw. abfliessen. Durch die Anordnung der Abflüsse 4 kann der Lack 8 vollständig vom Dämmelement abfliessen. Bei der Tauchlackierung des Strukturelementes 12, 14 ist das expandierbare Material 13 in einem nicht expandierten Zustand.

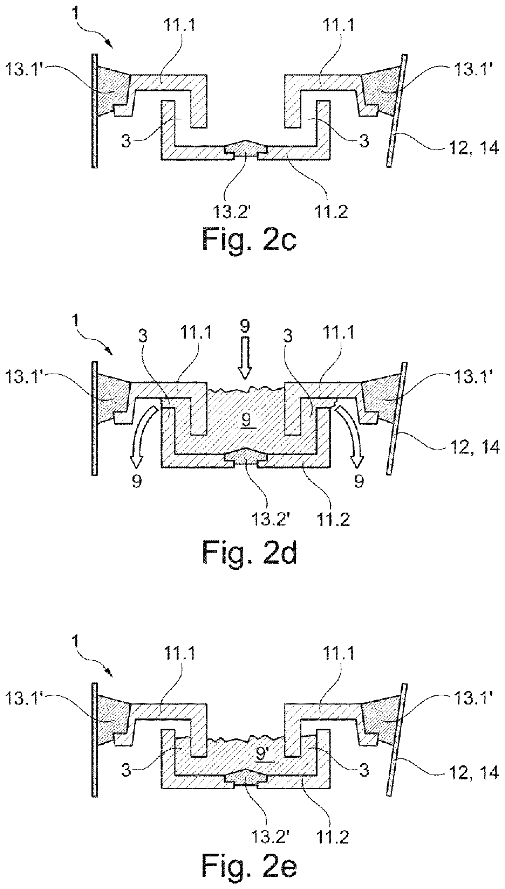

In Fig. 2c ist eine Situation nach einer Expansion des expandierbaren Materials 13 dargestellt. Dabei verschliesst das expandierte Material 13' die zuvor bestehenden Abflüsse 4 vollständig. Somit bleibt lediglich der zumindest eine Siphon 3 als Durchfluss durch das Dämmelement.

In Fig. 2d ist eine Situation während einer Wachsanwendung im System 1 dargestellt. Dabei kann das flüssige Wachs 9 durch den zumindest einen Siphon 3 hindurchfliessen. Zuvor bestehende Abflüsse 4 sind jedoch durch das expandierte Material 13' verschlossen, so dass das flüssige Wachs 9 nicht durch diese zuvor bestehenden Abflüsse 4 fliessen kann.

In Fig. 2e ist schliesslich eine Situation nach einer Wachsbehandlung im System 1 dargestellt. Dabei ist eine im Siphon 3 verbleibende Restmenge des festen Wachses 9' gezeigt, welche den zumindest einen Siphon 3 vollständig verschliesst. Weil das Wachs 9' bei normalen Betriebstemperaturen in einem festen Zustand ist, wird das Dämmelement durch die im Siphon 3 verbleibende Restmenge des festen Wachses 9' effektiv und zuverlässig abgedichtet bzw. verschlossen.

Falls nun nach der Wachsanwendung und nach der Erstarrung des Wachses 9' die Temperatur erhöht wird, beispielsweise indem das Kraftfahrzeug an der Sonne steht, verflüssigt sich das Wachs 9 wieder, und das flüssige Wachs 9 kann wiederum durch den Siphon 3 nachfliessen, wie dies in Fig. 2d dargestellt ist. Sobald sich das System 1 abkühlt und das Wachs 9 verfestigt wird, ist der Siphon 3 wieder durch das feste Wachs 9' verschlossen.

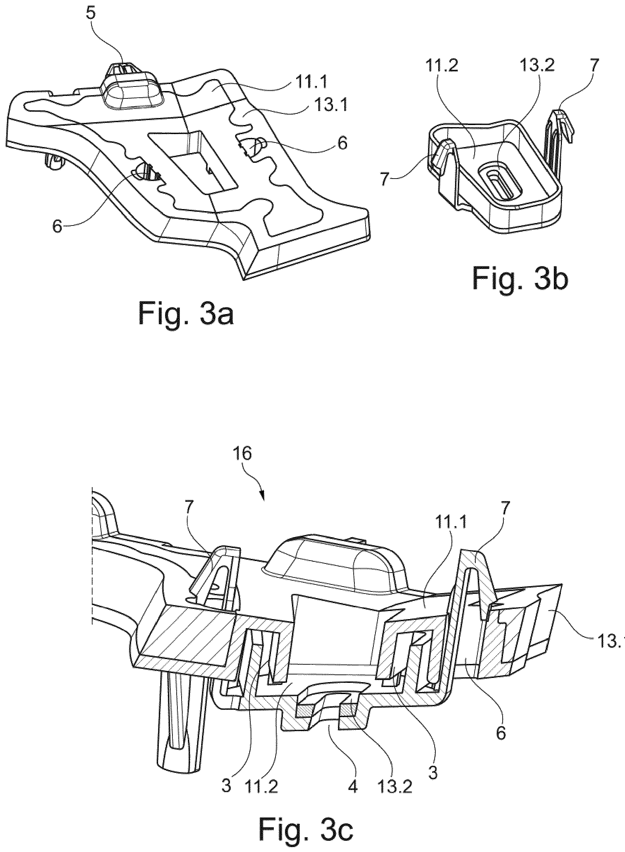

In den Fig. 3a bis 3c ist beispielhaft ein Dämmelement 16 bzw. Teilelemente des Dämmelementes 16 dargestellt. Dabei zeigt die Fig. 3a einen ersten Teilträger 11.1 mit darauf angeordnetem ersten expandierbaren Material 13.1, und Fig. 3b zeigt einen zweiten Teilträger 11.2 mit darauf angeordnetem zweiten expandierbaren Material 13.2.

Der erste Teilträger 11.1 und der zweite Teilträger 11.2 haben Kopplungselemente 6, 7, durch welche die Teilträger 11.1, 11.2 miteinander verbunden werden können. In diesem Ausführungsbeispiel ist das erste Kopplungselement 6 als Öffnung ausgebildet und das zweite Kopplungselement 7 ist als Clip ausgebildet. Der Clip 7 ist dabei in der Öffnung 6 einrastbar, so dass die Teilträger 11.1, 11.2 miteinander verbindbar sind. Wie hier dargestellt, können die Teilträger 11.1, 11.2 jeweils auch zwei oder mehrere Kopplungselemente 6, 7 aufweisen.

In Fig. 3c ist ein Querschnitt durch das Dämmelement 16 gezeigt, wobei in dieser Figur die Teilträger 11.1, 11.2 miteinander verbunden sind, das heisst, die Kopplungselemente 6, 7 der Teilträger 11.1, 11.2 sind wirkverbunden. Dabei zeigen die Fig. 3a bis 3c das Dämmelement jeweils vor einer Wachsanwendung, und auch vor einer Expansion der expandierbaren Materialien 13.1, 13.2.

### Bezugszeichenliste

- 1: System
- 3: Siphon
- 4: Abfluss
- 5: Clip
- 6: erstes Kopplungselement
- 7: zweites Kopplungselement
- 8: Lack
- 9: Wachs
- 10: Karosserie
- 11: Träger
- 11.1: erster Teilträger
- 11.2: zweiter Teilträger
- 12: Strukturelement
- 13: expandierbares Material
- 13.1: erstes expandierbares Material
- 13.2: zweites expandierbares Material
- 14: Strukturelement
- 16: Dämmelement

## Patentansprüche

1. Verfahren zur Dämmung eines Strukturelementes (12, 14) in einem Kraftfahrzeug, das Verfahren umfassend die Schritte:
Bereitstellen eines Strukturelementes (12, 14) mit einem Hohlraum;
Anordnen eines Dämmelementes (16) im Hohlraum des Strukturelementes (12, 14), wobei auf dem Dämmelement (16) expandierbares Material (13) angeordnet ist,
wobei das Dämmelement (16) zumindest einen Siphon (3) hat, und wobei das Dämmelement (16) derart ausgebildet und/oder im Strukturelement (12, 14) angeordnet ist, dass zusätzlich zum Siphon (3) zumindest ein Abfluss besteht;
Beschichten der Innenwände des Strukturelementes (12, 14) mit einem Lack (8), wobei der Lack (8) durch den zumindest einen Abfluss (4) abfliessen kann;
Erwärmen, wobei das expandierbare Material (13) expandiert und dabei den zumindest einen Abfluss (4) verschliesst; und
Einbringen von Wachs (9) in das Strukturelement (12, 14), wobei das Wachs (9) durch den Siphon (3) des Dämmelementes (16) abfliessen kann, und wobei eine im Siphon (3) verbleibende Restmenge des Wachses (9) den Siphon (3) verschliesst.

2. Verfahren nach Anspruch 1, wobei das Dämmelement (16) einen Träger (11) mit darauf angeordnetem expandierbarem Material (13) hat; und
wobei das expandierbare Material (13) derart auf dem Träger (11) angeordnet ist, dass der zumindest eine Abfluss (4) verschlossen ist, wenn das expandierbare Material (13) in einem expandierten Zustand ist.

3. Verfahren nach einem der Ansprüche 1 oder 2, wobei das Dämmelement (16) derart im Strukturelement (12, 14) angeordnet ist, dass zwischen dem Dämmelement (16) und dem Strukturelement (12, 14) zumindest ein Abfluss (4) besteht, wenn das expandierbare Material (13) in einem nicht expandierten Zustand ist.

4. Verfahren nach einem der vorhergehenden Ansprüche, wobei das Dämmelement (16) derart ausgebildet ist, dass eine Öffnung im Träger (11) oder eine Öffnung zwischen zwei Teilträgern (11.1, 11.2) den zumindest einen Abfluss (4) bildet, wenn das expandierbare Material (13) in einem nicht expandierten Zustand ist.

5. Verfahren nach einem der vorhergehenden Ansprüche, wobei der Träger (11) zweiteilig oder mehrteilig ausgebildet ist, so dass der Träger (11) zumindest einen ersten Teilträger (11.1) und einen zweiten Teilträger (11.2) umfasst.

6. Verfahren nach Anspruch 5, wobei die Teilträger (11.1, 11.2) jeweils ein Kopplungselement (6, 7) zur Verbindung der Teilträger (11.1, 11.2) zu dem Träger (11) umfassen.

7. Verfahren nach Anspruch 6, wobei ein erstes Kopplungselement (6) als Öffnung ausgebildet ist, und wobei ein zweites Kopplungselement (7) als Clip ausgebildet ist, wobei der Clip in der Öffnung einrastbar ist.

8. Verfahren nach einem der Ansprüche 5 bis 7, wobei der erste Teilträger (11.1) im Wesentlichen eine Form eines Querschnittes des Strukturelementes (12, 14) aufweist, und wobei der zweite Teilträger (11.2) wannenartig ausgebildet ist.

9. Verfahren nach Anspruch 8, wobei ein Wannenrand des zweiten Teilträgers (11.2) zusammen mit zumindest einem bogenförmigen Element des ersten Teilträgers (11.1) den zumindest einen Siphon (3) bildet.

10. Verfahren nach einem der Ansprüche 8 oder 9, wobei in einem Boden des wannenartigen zweiten Teilträgers (11.2) eine Öffnung ausgebildet ist, welche den zumindest einen Abfluss (4) bildet.

11. Verfahren nach einem der vorhergehenden Ansprüche, wobei das expandierbare Material (13) auf einem Randbereich des Trägers (11), welcher an den Abfluss (4) angrenzt, angeordnet ist.

12. Verfahren nach einem der vorhergehenden Ansprüche, wobei das expandierbare Material (13) eine Expansionsrate von 800% bis 4000% hat.

13. Verfahren nach einem der vorhergehenden Ansprüche, wobei das expandierbare Material (13) als temperaturinduziertes Material ausgebildet ist.

## Claims

1. Method for insulating a structural element (12, 14) in a motor vehicle, the method comprising the following steps:
providing a structural element (12, 14) which has a cavity;
arranging an insulating element (16) in the cavity of the structural element (12, 14), wherein expandable material (13) is arranged on the insulating element (16), wherein the insulating element (16) has at least one siphon (3), and wherein the insulating element (16) is formed in such a way and/or is arranged in the structural element (12, 14) in such a way that at least one outflow exists in addition to the siphon (3);
coating the inner walls of the structural element (12, 14) with a lacquer (8), wherein the lacquer (8) can drain off through the at least one outflow (4);
heating, wherein the expandable material (13) expands and in the process closes the at least one outflow (4);
introducing wax (9) into the structural element (12, 14), wherein the wax (9) can drain off through the siphon (3) of the insulating element (16), and wherein a residual amount of the wax (9) that remains in the siphon (3) closes the siphon (3).

2. Method according to Claim 1, wherein the insulating element (16) has a carrier (11) with expandable material (13) arranged thereupon; and
wherein the expandable material (13) is arranged on the carrier (11) in such a way that the at least one outflow (4) is closed when the expandable material (13) is in an expanded state.

3. Method according to either of Claims 1 and 2, wherein the insulating element (16) is arranged in the structural element (12, 14) in such a way that at least one outflow (4) exists between the insulating element (16) and the structural element (12, 14) when the expandable material (13) is in a non-expanded state.

4. Method according to one of the preceding claims, wherein the insulating element (16) is formed in such a way that an opening in the carrier (11) or an opening between two sub-carriers (11.1, 11.2) forms the at least one outflow (4) when the expandable material (13) is in a non-expanded state.

5. Method according to one of the preceding claims, wherein the carrier (11) is formed in two parts or multiple parts, with the result that the carrier (11) comprises at least a first sub-carrier (11.1) and a second sub-carrier (11.2).

6. Method according to Claim 5, wherein each of the sub-carriers (11.1, 11.2) comprises a coupling element (6, 7) for connecting the sub-carriers (11.1, 11.2) to the carrier (11).

7. Method according to Claim 6, wherein a first coupling element (6) is in the form of an opening, and wherein a second coupling element (7) is in the form of a clip, wherein the clip can be latched in the opening.

8. Method according to one of Claims 5 to 7, wherein the first sub-carrier (11.1) has substantially the form of a cross section of the structural element (12, 14), and wherein the second sub-carrier (11.2) has a trough-like form.

9. Method according to Claim 8, wherein a trough edge of the second sub-carrier (11.2) together with at least one arcuate element of the first sub-carrier (11.1) forms the at least one siphon (3).

10. Method according to either of Claims 8 and 9, wherein an opening which forms the at least one outflow (4) is formed in a base of the trough-like second sub-carrier (11.2).

11. Method according to one of the preceding claims, wherein the expandable material (13) is arranged on a peripheral region of the carrier (11) that adjoins the outflow (4).

12. Method according to one of the preceding claims, wherein the expandable material (13) has an expansion rate of 800% to 4000%.

13. Method according to one of the preceding claims, wherein the expandable material (13) is in the form of a temperature-stimulated material.

## Revendications

1. Procédé pour l'isolation d'un élément structural (12, 14) dans un véhicule automobile, le procédé comprenant les étapes suivantes :
la fourniture d'un élément structural (12, 14) muni d'une cavité ;
l'agencement d'un élément isolant (16) dans la cavité de l'élément structural (12, 14), un matériau expansible (13) étant agencé sur l'élément isolant (16),
l'élément isolant (16) ayant au moins un siphon (3), et l'élément isolant (16) étant configuré et/ou agencé dans l'élément structural (12, 14) de telle sorte qu'au moins une évacuation existe en plus du siphon (3) ;
le revêtement des parois intérieures de l'élément structural (12, 14) avec un vernis (8), le vernis (8) pouvant s'écouler par l'au moins une évacuation (4) ;
le chauffage, le matériau expansible (13) s'expansant et fermant ainsi l'au moins une évacuation (4) ; et
l'introduction de cire (9) dans l'élément structural (12, 14), la cire (9) pouvant s'écouler par le siphon (3) de l'élément isolant (16), et une quantité résiduelle de la cire (9) restant dans le siphon (3) fermant le siphon (3).

2. Procédé selon la revendication 1, dans lequel l'élément isolant (16) a un support (11) avec un matériau expansible (13) agencé sur celui-ci ; et
dans lequel le matériau expansible (13) est agencé sur le support (11) de telle sorte que l'au moins une évacuation (4) soit fermée lorsque le matériau expansible (13) est dans un état expansé.

3. Procédé selon l'une quelconque des revendications 1 ou 2, dans lequel l'élément isolant (16) est agencé dans l'élément structural (12, 14) de telle sorte qu'au moins une évacuation (4) existe entre l'élément isolant (16) et l'élément structural (12, 14) lorsque le matériau expansible (13) est dans un état non expansé.

4. Procédé selon l'une quelconque des revendications précédentes, dans lequel l'élément isolant (16) est configuré de telle sorte qu'une ouverture dans le support (11) ou une ouverture entre deux supports partiels (11.1, 11.2) forme l'au moins une évacuation (4) lorsque le matériau expansible (13) est dans un état non expansé.

5. Procédé selon l'une quelconque des revendications précédentes, dans lequel le support (11) est configuré à deux parties ou plus de parties, de telle sorte que le support (11) comporte au moins un premier support partiel (11.1) et un deuxième support partiel (11.2).

6. Procédé selon la revendication 5, dans lequel les supports partiels (11.1, 11.2) comportent chacun un élément de couplage (6, 7) pour la liaison des supports partiels (11.1, 11.2) en le support (11).

7. Procédé selon la revendication 6, dans lequel un premier élément de couplage (6) est configuré sous la forme d'une ouverture, et dans lequel un deuxième élément de couplage (7) est configuré sous la forme d'un clip, le clip étant encliquetable dans l'ouverture.

8. Procédé selon l'une quelconque des revendications 5 à 7, dans lequel le premier support partiel (11.1) présente essentiellement une forme d'une section transversale de l'élément structural (12, 14), et dans lequel le deuxième support partiel (11.2) est configuré à la façon d'une cuvette.

9. Procédé selon la revendication 8, dans lequel un bord de cuvette du deuxième support partiel (11.2) forme conjointement avec au moins un élément de forme arquée du premier support partiel (11.1) l'au moins un siphon (3).

10. Procédé selon l'une quelconque des revendications 8 ou 9, dans lequel une ouverture est formée dans un fond du deuxième support partiel à la façon d'une cuvette (11.2), qui forme l'au moins une évacuation (4) .

11. Procédé selon l'une quelconque des revendications précédentes, dans lequel le matériau expansible (13) est agencé sur une zone de bord du support (11), qui est adjacente à l'évacuation (4).

12. Procédé selon l'une quelconque des revendications précédentes, dans lequel le matériau expansible (13) a un taux d'expansion de 800 % à 4 000 %.

13. Procédé selon l'une quelconque des revendications précédentes, dans lequel le matériau expansible (13) est configuré sous la forme d'un matériau induit par la température.
